# EUROPEAN PATENT SPECIFICATION

(11) **EP 3 287 636 B1**
(45) Date of publication and mention of the grant of the patent: **02.01.2019**
(21) Application number: 17157331.4
(22) Date of filing: 22.02.2017
(51) Int. Cl.: F04B 1/06, F04B 1/08, F04B 49/08, F04B 49/10, F03C 1/00, F03C 1/40

(54) **OPERATION METHOD AND OPERATION CONTROL SYSTEM FOR HYDRAULIC MOTOR, HYDRAULIC TRANSMISSION, AND RENEWABLE-ENERGY TYPE POWER GENERATING APPARATUS**
BETRIEBSVERFAHREN UND BETRIEBSSTEUERUNGSSYSTEM FÜR EINEN HYDRAULISCHEN MOTOR, HYDRAULISCHES GETRIEBE UND VORRICHTUNG ZUR ERZEUGUNG ERNEUERBARER ENERGIE
PROCÉDÉ DE FONCTIONNEMENT ET SYSTÈME DE COMMANDE DE FONCTIONNEMENT POUR MOTEUR HYDRAULIQUE, TRANSMISSION HYDRAULIQUE ET APPAREIL DE PRODUCTION DE PUISSANCE DE TYPE À ÉNERGIE RENOUVELABLE

(30) Priority: 26.08.2016 JP 2016165249
(43) Date of publication of application: 28.02.2018
(73) Proprietor: Mitsubishi Heavy Industries, Ltd., Tokyo 108-8215 (JP)
(72) Inventor: Tsutsumi, Kazuhisa, Tokyo, 108-8215 (JP); Mine, Takumi, Tokyo, 108-8215 (JP); Abrahams, Daniel, Loanhead, Midlothian, Lothian EH20 9TB (GB)
(74) Representative: Henkel, Breuer & Partner

(56) References cited:
- EP-A1- 2 626 554
- EP-B1- 2 486 273
- US-A- 4 503 673

## Description

### TECHNICAL FIELD

The present disclosure relates to an operation method and a hydraulic motor with an operation control system, as well as to a hydraulic transmission and a renewable-energy type power generating apparatus.

### BACKGROUND ART

Hydraulic machines such as a hydraulic pump and a hydraulic motor have been known.

For instance, US 2010/0040470A discloses a hydraulic machine which converts fluid energy of working fluid into rotational energy of a rotary shaft, or vice versa, by utilizing a cyclic volume change of a working chamber formed by a cylinder and a piston.

EP 2486273B1 discloses a wind turbine with a hydraulic transmission with a hydraulic motor including a rotor shaft, a cylinder, a piston forming a working chamber together with the cylinder, and at least one high-pressure valve and at least one low-pressure valve configured to switch a communication state between the working chamber and a high-pressure line and between the working chamber and a low-pressure line, respectively, in connection with reciprocating motion of the piston. In response to the detection of a fault event the fluid communication between a fluid accumulator and a high-pressure line is interrupted and the fluid pressure within the high-pressure line is raised.

EP 2626554A1 discloses another power generation apparatus in the form of a wind turbine with a hydraulic transmission including a hydraulic motor and a hydraulic pump and a monitor unit which obtains a state value indicating an operation state of the power generation apparatus and a stop control unit for stopping the power generation apparatus when a fault occurs.

### SUMMARY

In a typical case, if an abnormality of a hydraulic machine is detected, operation of a hydraulic machine is normally stopped by setting the displacement of the hydraulic machine to zero immediately and reducing the pressure of the high-pressure line immediately, in order to protect components (e.g. pistons) of the hydraulic machine from damage or the like.

However, the present inventors conducted intensive researches and found that such immediate stop of operation of a hydraulic motor upon detection of an abnormality of the hydraulic motor may in fact cause damage to components of the hydraulic machine.

In view of the above, an object of at least one embodiment of the present invention is to provide an operation method and a hydraulic motor with an operation control system, as well as a hydraulic transmission and a renewable-energy type power generating apparatus, whereby it is possible to reduce the risk of damage to components of a hydraulic motor.

The present invention provides a method of operating a hydraulic motor with the features of claim 1 and a hydraulic motor including an operation control system with the features of claim 11.
(1) A method of operating a hydraulic motor including: a rotor shaft; a cylinder; a piston forming a working chamber together with the cylinder; and at least one high-pressure valve and at least one low-pressure valve configured to switch a communication state between the working chamber and a high-pressure line and between the working chamber and a low-pressure line, respectively, in connection with reciprocating motion of the piston, according to at least one embodiment of the present invention, comprises: a step of detecting an abnormality of the hydraulic motor; and a stop step of stopping the hydraulic motor if the abnormality is detected. The stop step includes: maintaining a pressure of the high-pressure line to be within a predetermined range of not greater than an upper limit value Pmax which is smaller than a rated pressure of the high-pressure line and not less than a lower limit value Pmin which is greater than zero at least until a rotation speed of the rotor shaft decreases to a predetermined rotation speed which is lower than a rated rotation speed.

If an abnormality occurs in a hydraulic motor, pistons may fail to operate normally and develop galling. In this case, if the pressure of the high-pressure line is immediately reduced to a pressure close to the pressure of a low-pressure line during a procedure for stopping the hydraulic motor, the pressure of the working chamber also decreases immediately in accordance with a decrease in the pressure of the high-pressure line. Thus, in accordance with a rapid decrease in the pressure of the working chamber, a force of a hydraulic pressure pressing the pistons downward also decreases abruptly. Meanwhile, it takes some time before rotation of a rotor shaft stops, and thus the rotor shaft continues to rotate for a while after the pressure of the working chambers decreases. Therefore, a friction force applied to the pistons due to galling may be greater than the force of the hydraulic pressure inside the working chambers pressing the pistons downward due to a pressure decrease in the working chambers. In this case, the pistons cannot slide inside the cylinders smoothly, which may cause damage to components of the hydraulic motor, such as removal of a piston from a conn-rod.

In this regard, according to the above method (1), in the stop step, the pressure of the high-pressure line is maintained to be within a predetermined range of not more than an upper limit value Pmax smaller than a rated pressure of the high-pressure line and not less than a lower limit value Pmin greater than zero, at least until the rotation speed of the rotor shaft decreases to a predetermined rotation speed lower than a rated rotation speed. Accordingly, even if there is galling of the piston, the pressure of the high-pressure line is maintained to be a certain level until the rotation speed of the rotor shaft decreases to the predetermined rotation speed, and thereby the pressure of the working chamber is maintained to be at the same level as the pressure of the high-pressure line. Thus, it is possible to achieve a sufficient force of hydraulic pressure that pushes down the piston against a friction force due to galling while the rotor shaft is rotating at a rotation speed not less than the predetermined rotation speed, and thereby it is possible to reduce the risk of occurrence of damage to components (e.g. piston) of the hydraulic motor.
(2) In the above method according to the invention (1), the stop step includes setting a displacement of the hydraulic motor to a value which is greater than zero, at least until the pressure of the high-pressure line decreases to the upper limit value Pmax.

According to the intensive researches by the present inventors, it was found that galling of a piston due to abnormality of a hydraulic motor is related to heat generation at a piston sliding part. Furthermore, according to findings of the present inventors, if the pressure of a working chamber is set to be somewhat lower than the rated pressure, the amount of leaked oil supplied from the working chamber to the piston sliding parts increases.

Accordingly, according to the above method (2), in the stop step, at least until the pressure of the high-pressure line decreases to the upper limit value Pmax, the displacement of the hydraulic motor is set to a value larger than zero, and thereby it is possible to reduce the pressure of the high-pressure line more quickly to the upper limit value Pmax. Thus, it is possible reduce the pressure of the working chamber more quickly to increase the amount of oil leakage from the working chamber to the piston sliding part, thereby suppressing development of galling of the piston.
(3) In some embodiments, in the above method (2), the stop step further includes setting the displacement of the hydraulic motor to zero after the pressure of the high-pressure line decreases to the upper limit value Pmax.

According to the above method (3), in the stop step, the displacement of the hydraulic motor is set to zero after the pressure of the high-pressure line decreases to the upper limit value Pmax, and thus the pressure of the high-pressure line is no longer reduced by operation of the hydraulic motor after the pressure of the high-pressure line becomes less than the upper limit value Pmax, with the decrease rate of the pressure of the high-pressure line slowing down. Accordingly, it is possible to extend the period of time the pressure of the high-pressure line takes to decrease from the upper limit value Pmax to the lower limit value Pmin, and thus the pressure of the high-pressure line can be readily maintained in the predetermined range of not more than the upper limit value Pmax and not less than the lower limit value Pmin, until the rotation speed of the rotor shaft decreases to the predetermined rotation speed lower than the rated rotation speed. Accordingly, it is possible to reduce the risk of damage to components (e.g. piston) of the hydraulic motor more effectively.
(4) In some embodiments, in the above method (2) or (3), the at least one high-pressure valve comprises a plurality of high-pressure valves and the at least one low-pressure valve comprises a plurality of low-pressure valves, and the stop step includes adjusting the displacement of the hydraulic motor by operating the plurality of high-pressure valves and the plurality of low-pressure valves.

According to the above method (4), it is possible to adjust the pressure of the high-pressure line by adjusting the displacement of the hydraulic motor by controlling the plurality of high-pressure valves and the plurality of low-pressure valves. Accordingly, it is possible to reduce the risk of damage to components (e.g. piston) of the hydraulic motor.
(5) In some embodiments, in any one of the above methods (1) to (4), the rotor shaft of the hydraulic motor is related to a grid via a generator during normal operation of the hydraulic motor, and the stop step further includes separating the hydraulic motor from the grid via a generator so as to reduce a rotation speed of the hydraulic motor after the pressure of the high-pressure line decreases to the upper limit value Pmax.

According to the above method (5), it is possible to reduce the rotation speed of the hydraulic motor by separating the hydraulic motor from the grid via a generator after the pressure of the high-pressure line is reduced quickly to the upper limit value Pmax. Thus, it is possible to stop the hydraulic motor after reducing the pressure of the high-pressure line to such a level that makes it possible to suppress galling of the piston.
(6) In some embodiments, in any of the above methods (1) to (5), the stop step further includes opening a bypass valve disposed in a bypass line connecting the high-pressure line and the low-pressure line at least until the pressure of the high-pressure line decreases to the upper limit value Pmax.

According to the above method (6), in the stop step, a bypass valve disposed in a bypass line connecting the high-pressure line and the low-pressure line is opened at least until the pressure of the high-pressure line decreases to the upper limit value Pmax, and thereby it is possible to flow pressurized oil from the high-pressure line to the low-pressure line via the bypass valve. Thus, it is possible to reduce the pressure of the high-pressure line quickly, and to reduce the pressure of the working chamber more quickly, thereby increasing the amount of oil leakage from the working chamber to the piston sliding part and suppressing development of galling of the piston more effectively.
(7) In some embodiments, in the above method (6), the stop step further includes: opening of opening or closing of the bypass valve so as to maintain the pressure of the high-pressure line to be within the predetermined range after the pressure of the high-pressure line decreases to the upper limit value Pmax.

According to the above method (7), the pressure of the high-pressure line is maintained to be in a predetermined range by opening and closing the bypass valve after the pressure of the high-pressure line decreases to the upper limit value Pmax. Accordingly, the pressure of the high-pressure line is more easily maintained to be in the predetermined range until the rotation speed of the rotor shaft of the hydraulic motor decreases sufficiently, and thus it is possible to reduce the risk of damage to components (e.g. piston) of the hydraulic motor more effectively.
(8) In some embodiments, in the above method (6) or (7), the stop step further includes opening the bypass valve when the pressure of the high-pressure line has decreased to the upper limit value Pmax and the rotation speed of the rotor shaft is not greater than the predetermined rotation speed.

According to the above method (8), the stop step further includes opening the bypass valve when the pressure of the high-pressure line has decreased to the upper limit value Pmax and the rotation speed of the rotor shaft is not more than the predetermined rotation speed. Specifically, until the rotation speed of the rotor shaft decreases to the predetermined rotation speed, the pressure of the high-pressure line is maintained to be a certain level, and the bypass valve is opened to let the residual pressure of the high-pressure line escape to the low-pressure line when the rotation speed of the rotor shaft reaches the predetermined rotation speed or below. Accordingly, it is possible to reduce the risk of damage to components (e.g. piston) of the hydraulic motor, and to stop the hydraulic motor reliably.
(9) In some embodiments, in any one of the above methods (1) to (8), the stop step includes setting a displacement of a hydraulic pump for supplying pressurized oil to the high-pressure line to zero, in response to detection of the abnormality.

According to the above method (9), supply of pressure oil from the hydraulic pump to the high-pressure line is stopped by setting a displacement of the hydraulic pump to zero, in response to detection of the abnormality of the hydraulic motor. Accordingly, it is possible to reduce the pressure of the high-pressure line quickly to the upper limit value Pmax smaller than the rated pressure of the high-pressure line when the abnormality of the hydraulic motor is detected.
(10) In some embodiments, in any one of the above methods (1) to (9), the stop step further includes discharging high-pressure oil to the high-pressure line from an accumulator in communication with the high-pressure line.

Accordingly to the above method (10), high-pressure oil is discharged to the high-pressure line from the accumulator in communication with the high-pressure line, and thereby it is possible utilize the high-pressure oil to maintain the pressure of the high-pressure line to a pressure not less than the lower limit value Pmin. Thus, in the stop step, it is possible to maintain the pressure of the high-pressure line to be not less than the lower limit value Pmin for a relatively long period of time. Thus, even if it takes a relatively long time until the rotation speed of the rotor shaft decreases to the predetermined rotation speed after an abnormality of the hydraulic motor is detected, it is possible to maintain the pressure of the high-pressure line to be not less than the lower limit value Pmin by using high-pressure oil stored in the accumulator in such a period of time, to reduce the risk of damage to components (e.g. piston) of the hydraulic motor.
(11) In some embodiments, in any one of the above methods (1) to (10), the abnormality of the hydraulic motor is juddering in which the high-pressure valve fails to close and stays open over an entire period of the reciprocating motion of the piston.

According to the above method (11), it is possible to reduce the risk of damage to components (e.g. piston) of the hydraulic motor by applying the above method (1) when juddering occurs in the hydraulic motor.
(12) An operation control system for a hydraulic motor according to at least one embodiment of the present invention comprises: a hydraulic motor including: a rotor shaft; a cylinder; a piston forming a working chamber together with the cylinder; and at least one high-pressure valve and at least one low-pressure valve configured to switch a communication state between the working chamber and a high-pressure line and between the working chamber and a low-pressure line, respectively, in connection with reciprocating motion of the piston; an abnormality detecting part for detecting an abnormality of the hydraulic motor; and an operation control part for controlling operation of the hydraulic motor. The operation control part is configured to maintain a pressure of the high-pressure line to be within a predetermined range of not greater than an upper limit value Pmax which is smaller than a rated pressure of the high-pressure line and not less than a lower limit value Pmin which is greater than zero, at least until a rotation speed of the rotor shaft decreases to a predetermined rotation speed which is lower than the rated rotation speed, when the abnormality is detected by the abnormality detecting part.

With the above configuration (12), in the stop step, the pressure of the high-pressure line is maintained to be within a predetermined range of not more than an upper limit value Pmax smaller than a rated pressure of the high-pressure line and not less than a lower limit value Pmin greater than zero, at least until the rotation speed of the rotor shaft decreases to a predetermined rotation speed lower than a rated rotation speed. Accordingly, even if there is galling of the piston, the pressure of the high-pressure line is maintained to be a certain level until the rotation speed of the rotor shaft decreases to the predetermined rotation speed, and thereby the pressure of the working chamber is maintained to be at the same level as the pressure of the high-pressure line. Thus, it is possible to achieve a sufficient force of hydraulic pressure that pushes down the piston against a friction force due to galling while the rotor shaft is rotating at a rotation speed not less than the predetermined rotation speed, and thereby it is possible to reduce the risk of occurrence of damage to components (e.g. piston) of the hydraulic motor.
(13) A hydraulic transmission according to at least one embodiment of the present invention comprises: a hydraulic pump for producing pressurized oil; a hydraulic motor configured to be driven by the pressurized oil from the hydraulic pump; a high-pressure line connecting an outlet of the hydraulic pump and an inlet of the hydraulic motor; a low-pressure line connecting an outlet of the hydraulic motor and an inlet of the hydraulic pump; and the operation control system for the hydraulic motor according to the above (12). The operation control system is configured to control operation of the hydraulic motor.

With the above configuration (13), in the stop step, the pressure of the high-pressure line is maintained to be within a predetermined range of not more than an upper limit value Pmax smaller than a rated pressure of the high-pressure line and not less than a lower limit value Pmin greater than zero, at least until the rotation speed of the rotor shaft decreases to a predetermined rotation speed lower than a rated rotation speed. Accordingly, even if there is galling is on the piston, the pressure of the high-pressure line is maintained to be a certain level until the rotation speed of the rotor shaft decreases to the predetermined rotation speed, and thereby the pressure of the working chamber is maintained to be at the same level as the pressure of the high-pressure line. Thus, it is possible to achieve a sufficient force of hydraulic pressure that pushes down the piston against a friction force due to galling while the rotor shaft is rotating at a rotation speed not less than the predetermined rotation speed, and thereby it is possible to reduce the risk of occurrence of damage to components (e.g. piston) of the hydraulic motor.
(14) A renewable-energy type power generating apparatus according to at least one embodiment of the present invention comprises: a rotor configured to receive renewable energy to rotate; the hydraulic transmission according to the above (13); and a generator connected to the hydraulic transmission. The hydraulic pump is configured to be driven by the rotor to pressurize working oil, and the generator is configured to be driven by the hydraulic motor.

With the above configuration (14), in the stop step, the pressure of the high-pressure line is maintained to be within a predetermined range of not more than an upper limit value Pmax smaller than a rated pressure of the high-pressure line and not less than a lower limit value Pmin greater than zero, at least until the rotation speed of the rotor shaft decreases to a predetermined rotation speed lower than a rated rotation speed. Accordingly, even if there is galling of the piston, the pressure of the high-pressure line is maintained to be a certain level until the rotation speed of the rotor shaft decreases to the predetermined rotation speed, and thereby the pressure of the working chamber is maintained to be at the same level as the pressure of the high-pressure line. Thus, it is possible to achieve a sufficient force of hydraulic pressure that pushes down the piston against a friction force due to galling while the rotor shaft is rotating at a rotation speed not less than the predetermined rotation speed, and thereby it is possible to reduce the risk of occurrence of damage to components (e.g. piston) of the hydraulic motor.

According to at least one embodiment of the present invention, it is possible to provide an operation method and an operation control system for a hydraulic motor, as well as a hydraulic transmission and a renewable-energy type power generating apparatus, whereby it is possible to reduce the risk of damage to components of a hydraulic motor.

### BRIEF DESCRIPTION OF DRAWINGS

FIG. 1 is a schematic diagram of a wind turbine power generating apparatus according to an embodiment.
FIG. 2 is a schematic configuration diagram of a hydraulic transmission according to an embodiment.
FIG. 3 is a schematic diagram illustrating a configuration of an operation control system of a hydraulic motor according to an embodiment.
FIG. 4 is a schematic configuration diagram of a hydraulic motor according to an embodiment.
FIG. 5 is a flowchart of a method of operating a hydraulic motor according to an embodiment.
FIG. 6 is a time chart of a change in a state of a hydraulic motor upon execution of a method of operating a hydraulic motor according to an embodiment.
FIG. 7 is a graph showing a change in a pressure of a working chamber of a hydraulic motor.
FIG. 8 is a diagram graphically showing a duty cycle in a pressure waveform detected by a pressure sensor.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

A hydraulic motor for applying an operation method according to an embodiment of the present invention will now be described, referring to a hydraulic motor of a hydraulic transmission constituting a drivetrain of a renewable-energy type power generating apparatus as an example.

While a wind turbine power generating apparatus is described in the following description as an example of a renewable-energy type power generating apparatus, a hydraulic motor may be applied to other types of renewable-energy type power generating apparatus, such as a tidal-current power generating apparatus, an ocean-current power generating apparatus, and a river-current power generating apparatus.

Furthermore, usage of a hydraulic motor for applying an operation method according to an embodiment of the present invention is not limited to a renewable-energy type power generating apparatus, and may be other devices such as a construction machine.

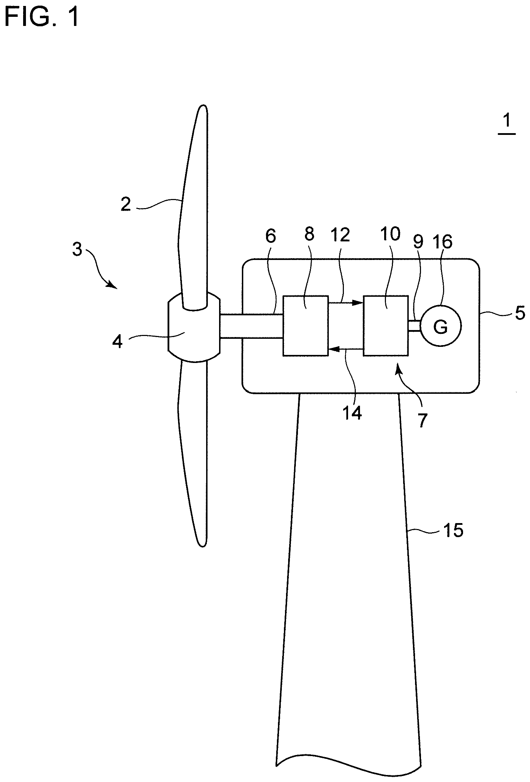

FIG. 1 is a schematic diagram of a wind turbine power generating apparatus according to an embodiment.

As shown in FIG. 1, the wind turbine power generating apparatus 1 includes a rotor 3 configured to rotate by receiving wind, which is a renewable energy, a hydraulic transmission 7 for transmitting rotation of the rotor 3, and a generator 16 for generating electric power.

The rotor 3 includes at least one blade 2, and a hub 4 to which the at least one blade 2 is mounted.

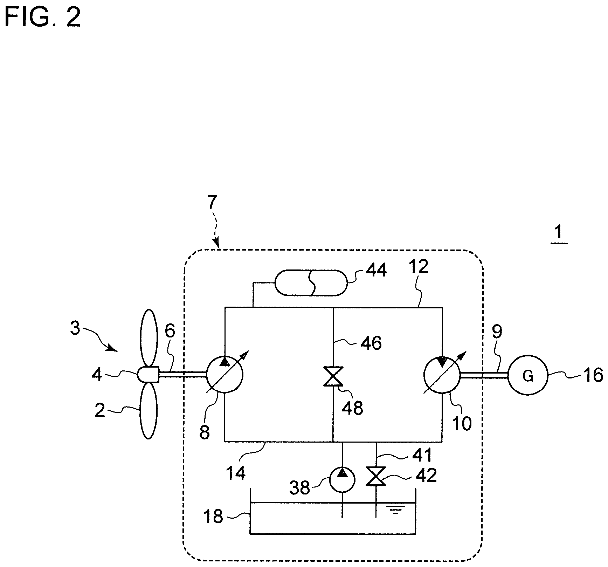

FIG. 2 is a schematic configuration diagram of a hydraulic transmission 7 according to an embodiment, depicted with the rotor 3 and the generator 16.

As depicted in FIGs. 1 and 2, the hydraulic transmission 7 includes a hydraulic pump 8 connected to the rotor 3 via a rotational shaft 6, a hydraulic motor 10, and a high-pressure line 12 and a low-pressure line 14 connecting the hydraulic pump 8 and the hydraulic motor 10. The high-pressure line 12 connects an outlet of the hydraulic pump 8 and an inlet of the hydraulic motor 10, while the low-pressure line 14 connects an outlet of the hydraulic motor 10 and an inlet of the hydraulic pump 8.

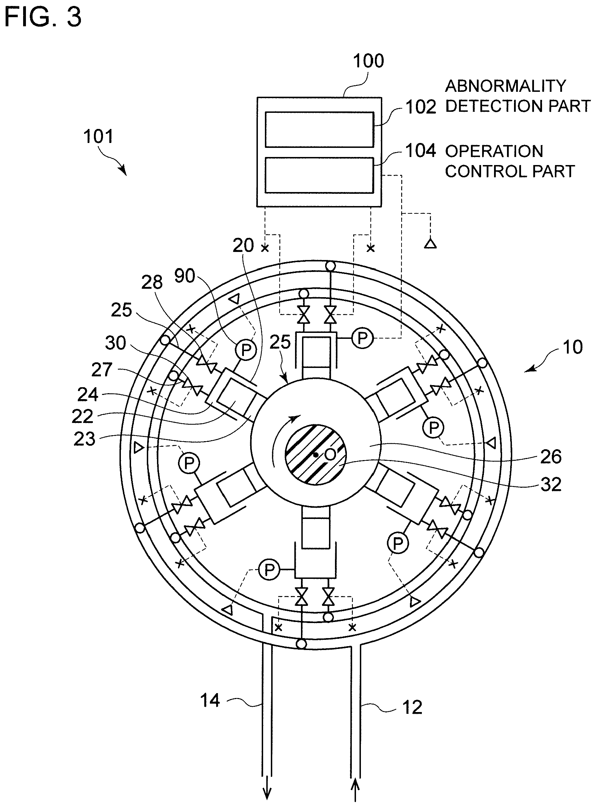

Furthermore, the hydraulic transmission 7 includes an operation control system 101 (see FIG. 3) for controlling operation of the hydraulic motor 10. The operation control of the hydraulic motor 10 by the operation control system 101 will be described later.

The generator 16 is coupled to the hydraulic motor 10 via an output shaft 9 of the hydraulic motor 10. In an embodiment, the generator 16 is a synchronous generator connected to a utility grid and driven by the hydraulic motor 10. Specifically, while the hydraulic motor 10 is operating normally, the rotor shaft of the hydraulic motor 10 is related to a grid via the generator 16.

The hydraulic pump 8, the hydraulic motor 10, and the generator 16 may be disposed inside a nacelle 5 mounted on a tower 15.

In the wind turbine power generating apparatus 1 depicted in FIG. 1, rotational energy of the rotor 3 is inputted into the generator 16 via the hydraulic transmission 7 including the hydraulic pump 8 and the hydraulic motor 10, and electric power is generated by the generator 16.

When the at least one blade 2 receives wind, the entire rotor 3 rotates due to the power of the wind, so that the hydraulic pump 8 is driven by the rotor 3 to pressurize working oil, thereby producing high-pressure working oil (pressurized oil). The pressurized oil produced by the hydraulic pump 8 is supplied to the hydraulic motor 10 via the high-pressure line 12, and drives the hydraulic motor 10. Electric power is generated by the generator 16 driven by the hydraulic motor 10 via the output shaft 9. The low-pressure working oil having performed work in the hydraulic motor 10 flows again into the hydraulic pump 8 via the low-pressure line 14.

The hydraulic pump 8 and the hydraulic motor 10 may be of a variable-displacement type whereby the displacement is adjustable.

The hydraulic transmission 7 depicted in FIG. 2 includes a storage tank 18 for storing working oil, and a boost pump 38 for pumping working oil stored in the storage tank 18 to the low-pressure line 14.

Furthermore, the hydraulic transmission 7 depicted in FIG. 2 includes a return line 41 disposed between the low-pressure line 14 and the storage tank 18, and a relief valve 42 disposed in the return line 41. Accordingly, the pressure inside the low-pressure line 14 is maintained to be close to a setting pressure of the relief valve 42 during normal operation of the hydraulic transmission 7.

In the embodiment illustrated in FIG. 2, the hydraulic transmission 7 includes an accumulator 44 connected to the high-pressure line 12. The accumulator 44 is configured to accumulate an extra portion of high-pressure oil (working oil) discharged from the hydraulic pump 8 to the high-pressure line 12, during normal operation of the hydraulic transmission 7.

The accumulator 44 is, for instance, a piston type or a bladder type accumulator provided with a deformable bladder that separates gas from working oil.

Furthermore, in an exemplary embodiment depicted in FIG. 2, the hydraulic transmission 7 further includes a bypass line 46 connecting the high-pressure line 12 and the low-pressure line 14 not via the hydraulic pump 8 and the hydraulic motor 10, and a bypass valve 48 disposed in the bypass line 46.

The bypass valve 48 is configured to open when the pressure of working oil in the high-pressure line 12 is at a predetermined value or higher. Accordingly, when the pressure of working oil in the high-pressure line 12 reaches the predetermined value or higher, high-pressure working oil inside the high-pressure line 12 is allowed to flow to the low-pressure line 12 via the bypass line 46 and the bypass valve 48, and thereby it is possible to reduce a pressure inside the high-pressure line 12.

The bypass valve 48 may be a relief valve or a logic valve configured to open when the pressure of working oil in the high-pressure line 12 is at least a predetermined value.

The hydraulic motor 10 according to an embodiment, and an operation control system for controlling operation of the hydraulic motor 10 will be described in more detail.

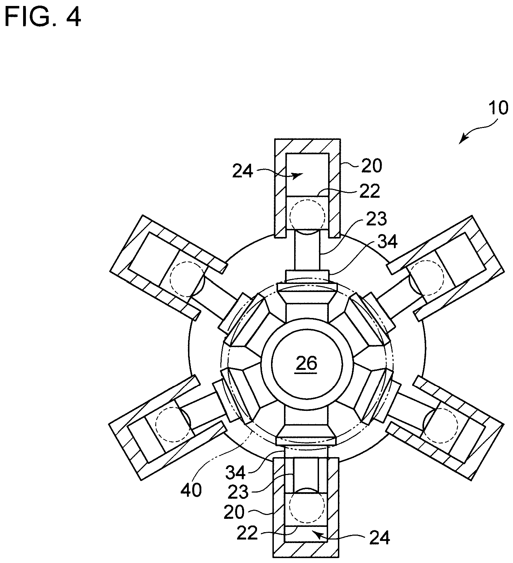

FIG. 3 is a schematic diagram illustrating a configuration of an operation control system of a hydraulic motor according to an embodiment. FIG. 4 is a schematic configuration diagram of a hydraulic motor according to an embodiment.

The operation control system 101 of the hydraulic motor 10 according to an embodiment includes the hydraulic motor 10, an abnormality detection part 102 for detecting an abnormality of the hydraulic motor 10, and an operation control part 104 for controlling operation of the hydraulic motor 10. The abnormality detection part 102 and the operation control part 104 are part of a diagnosis-control part 100 of the operation control system 101.

As depicted in FIGs. 3 and 4, the hydraulic motor 10 includes a rotor shaft 32 (not depicted in FIG. 4), a cylinder 20, a piston 22 which forms a working chamber 24 with the cylinder 20, a high-pressure valve 28 and a low-pressure valve 30 provided for the working chamber 24, and a cam 26 (conversion mechanism) for converting motion between the reciprocating motion of the piston 22 and the rotational motion of the rotor shaft 32. The cam 26 has a cam curved surface configured to contact the piston 22. Furthermore, as depicted in FIG. 4, the hydraulic motor 10 includes a driving rod 23 for transmitting reciprocating motion of the piston 22 to the eccentric cam 26. In FIG. 4, the high-pressure line 12, the low-pressure line 14, the high-pressure valve 28, and the low-pressure valve 30 are not depicted.

In the hydraulic motor 10 depicted in FIGs. 3 and 4, a plurality of cylinders 20 are disposed along the circumferential direction of the rotor shaft 32, and a plurality of pistons 22 and a plurality of driving rods 23 are disposed so as to correspond to the respective cylinders 20.

The cam 26 is an eccentric cam disposed eccentrically from the axial center O of the rotor shaft (crank shaft) 32 of the hydraulic motor 10. While the pistons 22 perform a set of upward and downward movement, the cam 26 and the rotor shaft 32 to which the cam 26 is mounted perform one revolution.

In another embodiment, the cam 26 is an annular-shaped multi-lobed cam (ring cam) with a plurality of lobes. In this case, while the cam 26 and the rotor shaft 32 to which the cam 26 is mounted perform one revolution, the pistons 22 perform as many sets of upward and downward movement as the number of lobes.

The high-pressure valve 28 is disposed in a high-pressure communication line 25 between the working chamber 24 and the high-pressure line 12 disposed outside the working chamber 24, and configured to be capable of switching the communication state between the working chamber 24 and the high-pressure line 12, in relation to reciprocating motion of the piston 22. The low-pressure valve 30 is disposed in a low-pressure communication line 27 between the working chamber 24 and the low-pressure line 14 disposed outside the working chamber 24, and configured to be capable of switching the communication state between the working chamber 24 and the low-pressure line 14, in relation to reciprocating motion of the piston 22.

The pistons 22, the cylinders 20, and the driving rods 23 are disposed in a radial fashion around the eccentric cam 26. The pistons 22 are caused to reciprocate at phases varied from one another by the working oil in the working chambers 24 and the eccentric cam 26. Specifically, when each piston 22 moves from the top dead center toward the bottom dead center, the low-pressure valve 30 is closed and the high-pressure valve 28 is opened, and thereby working oil is taken into the working chamber 24 from the high-pressure line 12. The working oil introduced to the working chamber 24 pushes the piston 22 downward along the cylinder axis toward the eccentric cam 26. At this time, the eccentric cam 26 is pushed by the driving rods 23 corresponding to the respective pistons 22, and thereby the eccentric cam 26 rotates. When the eccentric cam 26 rotates, the pistons 22 in the vicinity of the bottom dead center are pushed up by the eccentric cam 26 via the driving rods 23. At this time, the high-pressure valves 28 are closed and the low-pressure valves 30 are opened, and thereby working oil inside the working chambers 24 is discharged to the low-pressure line 14.

Such cyclic reciprocating motion of the pistons 22 causes the rotation shaft of the generator 16 coupled to the eccentric cam 26 to rotate.

In an embodiment, the hydraulic motor 10 includes a retention member 40 (see FIG. 4) for pressing the pistons 22 inward in the radial direction of the hydraulic motor 10. When the pistons 22 periodically reciprocate inside the cylinders 20 in accordance with the cam profile of the eccentric cam 26, the retention member 40 maintains contact between the driving rods 23 and the eccentric cam 26 so as to prevent the driving rods 23 from separating away from the eccentric cam 26.

The retention member 40 may include a retention ring of a ring shape, and an elastic member (e.g. spring) having elasticity that maintains contact between the driving rods 23 and the eccentric cam 26, disposed between the retention ring and the driving rods 23.

Next, a method of operating the hydraulic motor 10 according to some embodiments will be described. In the following description, an embodiment will be described as an example, in which the above described hydraulic motor 10 is operated by the above described abnormality detection part 102 and the operation control part 104.

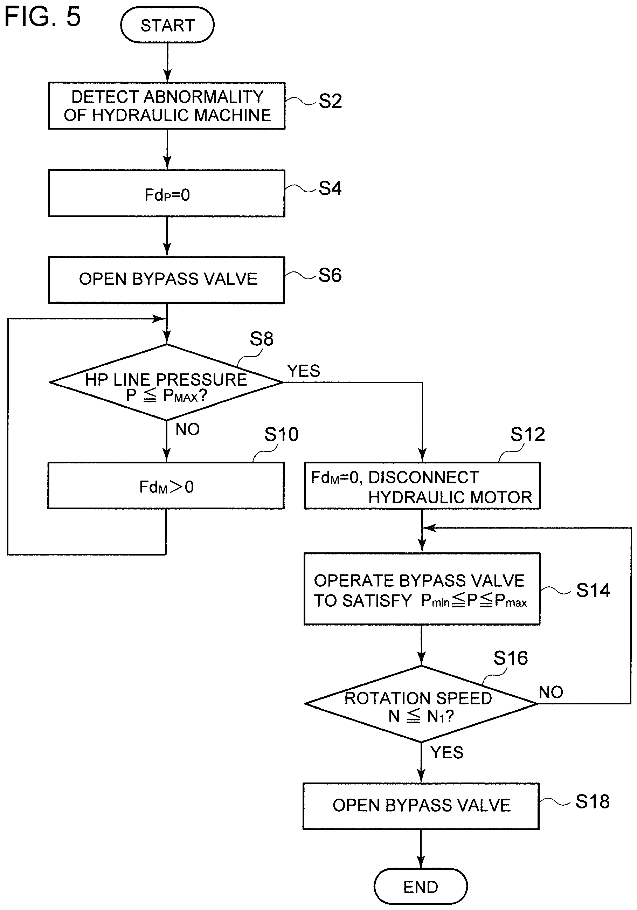

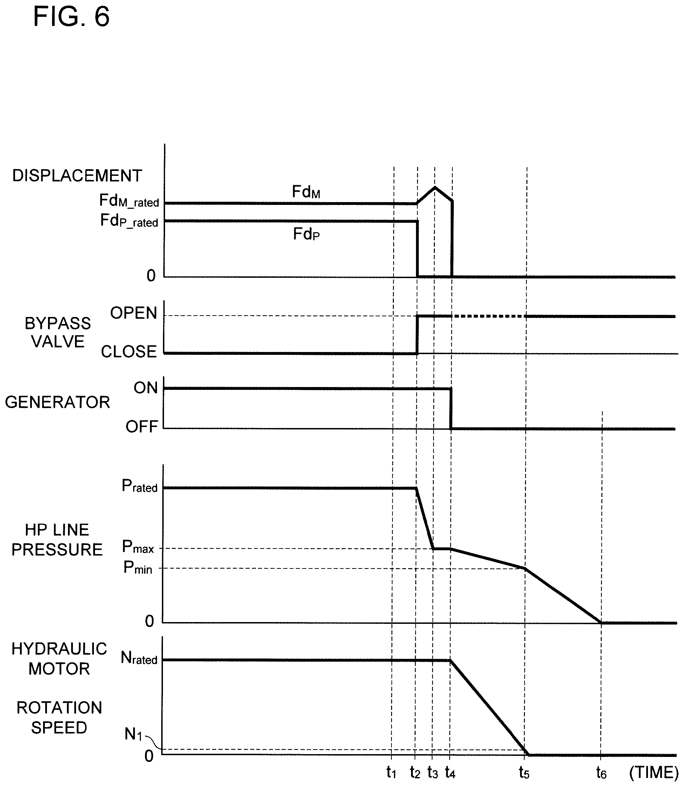

FIG. 5 is a flowchart of a method of operating the hydraulic motor 10 according to an embodiment. FIG. 6 is a time chart showing a change in the state of the hydraulic motor 10 upon execution of a method of operating the hydraulic motor 10 according to an embodiment.

In some embodiments, a method of operating the hydraulic motor 10 includes an abnormality detection step (S2) of detecting an abnormality of the hydraulic motor 10, and stop steps (S4 to S18) of stopping the hydraulic motor 10 when an abnormality of the hydraulic motor 10 is detected in the abnormality detection step (S2).

In the abnormality detection step (S2), the abnormality detection part 102 detects an abnormality of the hydraulic motor 10.

In an embodiment, the abnormality detection part 102 may be configured to receive a detection result obtained by the pressure sensor 90 (see FIG. 3) for detecting a pressure of each working chamber 24 of the hydraulic motor 10, and to detect an abnormality of the hydraulic motor 10 on the basis of the detection result.

Furthermore, the abnormality detection part 102 may be configured to transmit an abnormality detection signal to the operation control part 104 if the abnormality detection part 102 detects an abnormality of the hydraulic motor 10.

In the time chart of FIG. 6, the hydraulic motor 10 is operated at the rated rotation speed N_{rated} until time t₁, and an abnormality of the hydraulic motor 10 is detected at time t₁. At time t₂, an abnormal detection signal is transmitted from the abnormality detection part 102 to the operation control part 104.

In an embodiment, an abnormality of the hydraulic motor 10 detected in the abnormality detection step (S2) may be juddering, in which the high-pressure valve 28 fails to close and stays open continuously over the entire period of the reciprocating motion of the piston 22. Juddering will be described below in detail.

Upon receipt of the abnormal detection signal from the abnormality detection part 102, the operation control part 104 controls operation of the hydraulic motor 10 so as to stop the hydraulic motor 10 (stop steps S4 to S18).

With reference to the flow chart in FIG. 5, the pressure of the high-pressure line 12 is reduced to a pressure not more than an upper limit value Pmax smaller than the rated pressure P_{rated} of the high-pressure line 12, in response to detection of the abnormality in the abnormality detection step (S2).

More specifically, the displacement Fdp of the hydraulic pump 8 for supplying pressurized oil to the high-pressure line 12 is set to zero to stop supply of pressurized oil to the high-pressure line 12 from the hydraulic pump 8 (S4, time t₂ in FIG. 6).

In an embodiment, supply of pressurized oil to the high-pressure line 12 may be stopped by setting the rotation speed of the hydraulic pump 8 to zero.

Further, the operation control part 104 opens the bypass valve 48 provided for the bypass line 46 at least until the pressure of the high-pressure line 12 decreases to reach the upper limit value Pmax (S6, time t₂ in FIG. 6).

As described above, by operating the hydraulic pump 8 and/or the bypass valve 48, it is possible to reduce the pressure of the high-pressure line 12 quickly as well as to reduce the pressure of the working chambers 24 quickly. Thus, it is possible to increase the amount of oil leakage from the working chambers 24 to piston sliding parts to suppress development of galling of the pistons 22, upon occurrence of an abnormality of the hydraulic motor 10.

In response to the above steps S2 and S4 being performed, the pressure of the high-pressure line 12 begins to decrease. At least until the pressure of the high-pressure line 12 decreases to the upper limit value Pmax (NO in S8, time t₂ to t₄ in FIG. 6), the displacement Fd_{M} of the hydraulic motor 10 is set to a value larger than zero (S10).

Accordingly, at least until the pressure of the high-pressure line 12 decreases to the upper limit value Pmax , the displacement FdM of the hydraulic motor 10 is set to a value larger than zero, and thereby it is possible to reduce the pressure of the high-pressure line 12 more quickly to the upper limit value Pmax. Thus, it is possible reduce the pressure of the working chamber 24 more quickly to increase the amount of oil leakage from the working chambers 24 to piston sliding parts, thereby suppressing development of galling of the pistons 22 effectively.

In step S10, the operation control part 104 may adjust the displacement Fd_{M} of the hydraulic motor 10 by controlling the plurality of high-pressure valves 28 and the plurality of low-pressure valves 30.

For instance, if abnormality detection is performed on the hydraulic motor 10 on the basis of a pressure detection result of each working chamber 24 of the hydraulic motor 10 obtained by the pressure sensor 90 as described above, the displacement Fd_{M} of the hydraulic motor 10 may be adjusted by operating the high-pressure valves 28 and the low-pressure valves 30 corresponding to working chambers 24 other than the working chamber 24 in which an abnormality is detected in step S2.

Further, the operation control part 104 may select which one of the two cycles to perform, an active cycle of generating displacement or an inactive cycle of not generating displacement, for each of the plurality of working chambers 24 in each cycle of reciprocation, and operate the high-pressure valves 28 and the low-pressure valves 30 to perform the selected cycle, the active cycle or the inactive cycle, thereby adjusting the displacement Fd_{M} of the hydraulic motor 10.

Once the pressure of the high-pressure line decreases to the upper limit value Pmax after the foregoing controls from steps S4 to S10 (YES in step S8), the operation control part 104 sets the displacement Fd_{M} of the hydraulic motor 10 to zero and disconnects the hydraulic motor 10 from the grid to reduce the rotation speed of the hydraulic motor 10 (S12, time t₄). Further, the operation control part 104 maintains the pressure of the high-pressure line 12 in a predetermined range of not more than the upper limit value Pmax (where Pmax<P_{rated}) and not less than the lower limit value Pmin (where 0<Pmin), at least until the rotation speed of the rotor shaft 32 decreases to reach a predetermined rotation speed N₁ lower than the rated rotation speed N_{rated} (NO in step S16, time t₄ to t₅ in FIG. 6) (S14).

As described above, in step S12, the generator 16 is disconnected from the grid, and thereby the hydraulic motor 10 connected to the grid via the generator 16 is also disconnected from the grid. Accordingly, the rotation speed of the hydraulic motor 10 automatically decreases.

As described above, the pressure of the high-pressure line 12 is reduced quickly to the upper limit value Pmax and then the hydraulic motor 10 is disconnected from the grid to reduce the rotation speed of the hydraulic motor 10, and thereby it is possible to stop the hydraulic motor 10 after reducing the pressure of the high-pressure line 12 to such a level that makes it possible to suppress galling of the pistons 22.

Furthermore, in step S12, the displacement Fd_{M} of the hydraulic motor 10 is set to zero.

As described above, by setting the displacement Fd_{M} of the hydraulic motor 10 to zero, the pressure of the high-pressure line 12 is no longer reduced by operation of the hydraulic motor 10 after the pressure of the high-pressure line 12 becomes less than the upper limit value Pmax, and thus the decrease rate of the pressure of the high-pressure line 12 slows down.

Accordingly, it is possible to extend the period of time the pressure of the high-pressure line 12 takes to decrease from the upper limit value Pmax to the lower limit value Pmin, and thus the pressure of the high-pressure line 12 can be readily maintained in the predetermined range of not more than the upper limit value Pmax and not less than the lower limit value Pmin, until the rotation speed of the rotor shaft 32 decreases to the predetermined rotation speed N₁ lower than the rated rotation speed N_{rated}.

In step S12, the operation control part 104 may adjust the displacement FdM of the hydraulic motor 10 to zero, by operating the plurality of high-pressure valves 28 and the plurality of low-pressure valves 30.

More specifically, for each working chamber 24 of the hydraulic motor 10, the high-pressure valve 28 is kept closed and the low-pressure valve 30 is kept open, and thereby it is possible to set the displacement Fd_{M} of the hydraulic motor 10 to zero.

In step S14, as described above, the pressure of the high-pressure line 12 is maintained in a predetermined range of not more than the upper limit value Pmax (where Pmax<P_{rated}) and not less than the lower limit value Pmin (where 0<Pmin), until the rotation speed of the rotor shaft 32 decreases to reach a predetermined rotation speed N₁ lower than the rated rotation speed N_{rated} (No in step S16, time t₄ to t₅ in FIG. 6).

Accordingly, even if there is galling of the piston 22, the pressure of the high-pressure line 12 is maintained to be a certain level (not less than Pmin and not more than Pmax) until the rotation speed of the rotor shaft 32 decreases to the predetermined rotation speed N₁, and thereby the pressure of the working chamber 24 is maintained to be at the same level as the pressure of the high-pressure line 12. Thus, it is possible to achieve a sufficient force of hydraulic pressure that pushes down the piston 22 against a friction force due to galling while the rotor shaft 32 is rotating at a rotation speed not less than the predetermined rotation speed N₁, and thereby it is possible to reduce the risk of occurrence of damage to components (e.g. piston) of the hydraulic motor 10.

In step S14, the pressure of the high-pressure line 12 may be adjusted by opening and closing the bypass valve 48 so as to maintain the pressure of the high-pressure line 12 in a predetermined range of not less than Pmin and not more than Pmax.

Specifically, the bypass valve 48 may be opened if the pressure of the high-pressure line 12 is higher than a predetermined value, and be closed if the pressure of the high-pressure line 12 is lower than the predetermined value. The bypass valve 48 may be controlled to open and close taking account of hysteresis.

In the time chart of FIG. 6, the dotted line shows that the bypass valve 48 is controlled to open and close between time t₄ and t₅.

When the rotation speed of the rotor shaft 32 of the hydraulic motor 10 reaches the predetermined rotation speed N₁ or less (YES in step S16), the bypass valve 48 is opened and the residual pressure of the high-pressure line 12 is discharged to the low-pressure line 12 (S18, time t₅ in FIG. 6).

Accordingly, it is possible to reduce the pressure of the high-pressure line 12 by opening the bypass valve 48 and discharging the residual pressure of the high-pressure line 12 to the low-pressure line 14 after the rotation speed of the rotor shaft 32 of the hydraulic motor 10 decreases sufficiently (e.g. approximately N₁=5rpm) (time t₅ to t₆ in FIG. 6). Accordingly, it is possible to reduce the risk of damage to components (e.g. piston) of the hydraulic motor 10, and to stop the hydraulic motor 10 reliably.

In step S10, when the pressure of the working chamber 24 is reduced by setting the displacement Fd_{M} of the hydraulic motor 10 to zero or more and thereby the pressure of the high-pressure line 12 is reduced to a pressure close to Pmax (t₃ in FIG. 6), high-pressure oil may be discharged to the high-pressure line 12 from the accumulator 44 in communication with the high-pressure line 12.

Accordingly, high-pressure oil is discharged to the high-pressure line 12 from the accumulator 44 in communication with the high-pressure line 12, and thereby it is possible to maintain the pressure of the high-pressure line 12 to a pressure not less than the lower limit value Pmin (>0). In the example depicted in FIG. 6, the pressure of the high-pressure line 12 is maintained in the vicinity of Pmax for a while (t₃ to t₄ in FIG. 6).

Accordingly, high-pressure oil is discharged to the high-pressure line 12 from the accumulator 44, and thereby it is possible to maintain the pressure of the high-pressure line 12 to a pressure not less than the lower limit value Pmin for a relatively long time. Thus, even if it takes a relatively long time until the rotation speed of the rotor shaft 32 decreases to the predetermined rotation speed N₁ after an abnormality of the hydraulic motor 1 is detected in step S2, it is possible to maintain the pressure of the high-pressure line 12 to be not less than the lower limit value Pmin by using high-pressure oil stored in the accumulator 44 in such a period of time to reduce the risk of damage to components (e.g. piston 22) of the hydraulic motor 10.

As described above, in an embodiment, an abnormality of the hydraulic motor 10 detected in the abnormality detection step (S2) may be juddering, in which the high-pressure valve 28 fails to close and stays open continuously over the entire period of the reciprocating motion of the piston 22.

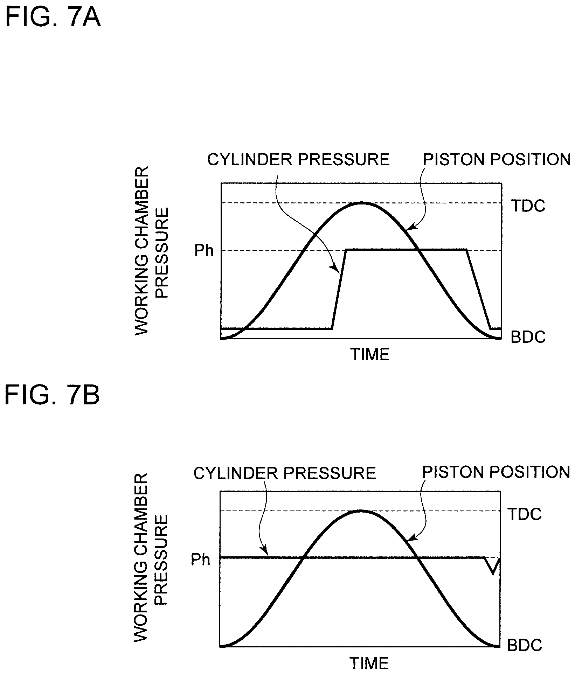

FIG. 7A is a graph showing a pressure change in the working chamber 24 during normal operation of the hydraulic motor 10, and FIG. 7B is a graph showing a pressure change in the working chamber 24 upon occurrence of juddering in the hydraulic motor 10.

As depicted in FIG. 7A, the pressure (in-cylinder pressure) of the working chamber 24 of the hydraulic motor 10 is in a similar range as the pressure of the low-pressure line 14 in most of a period in which the piston 22 moves from the bottom dead center toward the top dead center (compression stroke). However, in the hydraulic motor 10, when the piston 22 reaches immediately before the top dead center, the low-pressure valve 30 closes and the high-pressure valve 28 opens soon after. Thus, the in-cylinder pressure begins to increase rapidly immediately before the top dead center, and increases to the pressure Ph of the high-pressure line 12. Then the piston 22 is pushed down from the top dead center to the bottom dead center (intake stroke) by pressurized oil taken into the working chamber 24 via the high-pressure valve 28. When the piston 22 is immediately before the bottom dead center, the high-pressure valve 28 closes and the low-pressure valve 30 opens soon after. Accordingly, the in-cylinder pressure rapidly decreases immediately before the bottom dead center, to the pressure of the low-pressure line 14. As described above, the in-cylinder pressure is substantially the same as the pressure Ph of the high-pressure line 12 for about half a period T of the reciprocating motion of the piston 22.

Juddering in the hydraulic motor 10 is a phenomenon in which a valve body of the high-pressure valve 28 becomes immovable due to sticking of the valve body or entry of foreign matters, so that the high-pressure valve 28 fails to close and continues to be open during the entire period of the reciprocating motion of the piston 22. As depicted in FIG. 7B, if juddering occurs in the hydraulic motor 10, the pressure of the working chamber 24 (in-cylinder pressure) is the same as the pressure Ph of the high-pressure line 12 for a considerably long time as compared to the normally changing in-cylinder pressure shown in FIG. 7A.

In some embodiments, the abnormality detection part 102 may be configured to detect occurrence of juddering in the hydraulic motor 10 on the basis of a detection result obtained by the pressure sensor 90 for detecting a pressure of each working chamber 24 of the hydraulic motor 10.

In an embodiment, the abnormality detection part 102 may be configured to calculate a duty cycle (τ/T) that represents a fraction of a period τ in which a measured value of the pressure of the working chamber 24 detected by the pressure sensor 90 is at least a predetermined value, in the period T of reciprocating motion of the piston 22, and to detect juddering on the basis of whether the duty cycle is within a predetermined range.

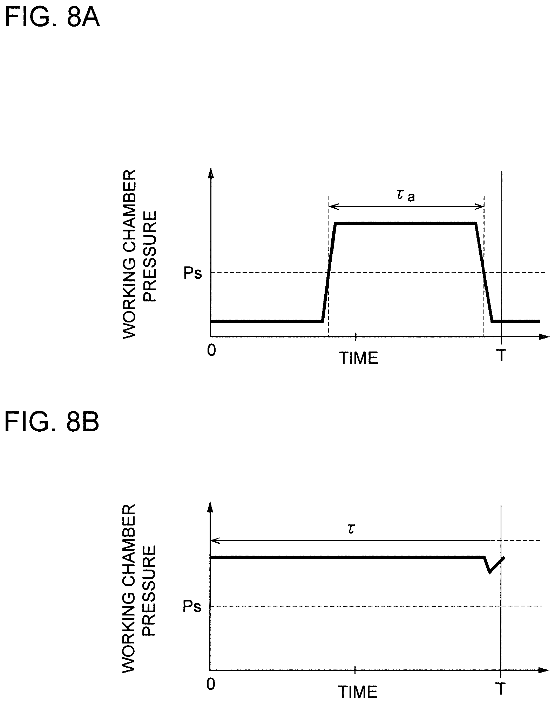

FIG. 8A is a graph showing a duty cycle during normal operation of the hydraulic motor 10, and FIG. 8B is a graph showing a duty cycle upon occurrence of juddering in the hydraulic motor 10. In FIGs. 8A and 8B, the duty cycle is the fraction (τ/T) of a period τ in which a measured value of the pressure of the working chamber 24 detected by the pressure sensor 90 is at least a predetermined value Ps, in the period T of reciprocating motion of the piston 22.

In an embodiment, a predetermined range may be defined with reference to τa/T in the case of FIG. 8A, where the cylinder is in a normal state. For instance, it may be determined that the cylinder is normal if a difference between the duty cycle τ/T calculated on the basis of a measurement result of the pressure and the above τa/T is within 15% with reference to τa/T, and it may be determined that the cylinder is in an abnormal state (juddering is occurring) if the difference is not within 15%.

Occurrence of juddering in the hydraulic motor 10 may lead to not only deterioration of performance of the hydraulic motor 10, but also damage to the pistons 22 due to galling, for instance. Thus, in the event of abnormality such as juddering, it is desirable to stop the hydraulic motor 10 immediately to prevent further development of damage to the pistons 22 such as galling.

If the pressure of the high-pressure line 12 is immediately reduced to a pressure close to the pressure of the low-pressure line 14 during a procedure for stopping the hydraulic motor 10, the pressure of the working chambers 24 decreases immediately in accordance with a decrease in the pressure of the high-pressure line 12. Thus, in accordance with a rapid decrease in the pressure of the working chambers 24, a force of hydraulic pressure pushing the pistons 22 downward also decreases abruptly. Meanwhile, it takes some time before rotation of the rotor shaft 32 stops, and thus the rotor shaft 32 continues to rotate for a while after the pressure of the working chamber 24 decreases. Therefore, if there is galling of the pistons 22, a friction force applied to the pistons 22 due to galling may be greater than the force of the hydraulic pressure inside the working chambers 24 pushing the pistons 22 down due to a pressure decrease in the working chamber 24. In this case, the pistons 22 can no longer slide inside the cylinders smoothly, which may cause further damage to components of the hydraulic motor 10, such as removal of a piston 22 from the driving rod (conn-rod) 23, and breakage of the retention member (retention ring) 40 for pressing the pistons 22 inward in the radial direction of the hydraulic motor 10.

In this regard, by the method of operating a hydraulic motor according to the above described embodiments, even if galling is formed on the pistons 22 upon occurrence of an abnormality such as juddering in the hydraulic motor 10, the pressure of the high-pressure line 12 is maintained at a certain level until the rotation speed of the rotor shaft 32 decreases to the predetermined rotation speed N₁, and thus the pressure of the working chamber 24 is maintained to be at the same level as the high-pressure line 12. Thus, it is possible to achieve a sufficient force of hydraulic pressure that pushes down the pistons 22 against a friction force due to galling while the rotor shaft 32 is rotating at a rotation speed not less than the predetermined rotation speed N₁, and thereby it is possible to reduce the risk of occurrence of damage to components (e.g. piston 22) of the hydraulic motor 10.

Embodiments of the present invention were described in detail above, but the present invention is not limited thereto, and various amendments and modifications falling within the scope of the claims may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A method of operating a hydraulic motor (10) including: a rotor shaft (32); a cylinder (20); a piston (22) forming a working chamber (24) together with the cylinder (20); and at least one high-pressure valve (28) and at least one low-pressure valve (30) configured to switch a communication state between the working chamber (24) and a high-pressure line (12) and between the working chamber (24) and a low-pressure line (14), respectively, in connection with reciprocating motion of the piston (22), the method comprising:
a step (S2) of detecting an abnormality of the hydraulic motor (10); and
a stop step of stopping the hydraulic motor (10) if the abnormality is detected,
wherein the stop step includes:
maintaining a pressure of the high-pressure line (12) to be within a predetermined range of not greater than an upper limit value Pmax which is smaller than a rated pressure of the high-pressure line (12) and not less than a lower limit value Pmin which is greater than zero at least until a rotation speed of the rotor shaft (32) decreases to a predetermined rotation speed (N₁) which is lower than a rated rotation speed (N_{rated}), and
setting a displacement (Fd_{M}) of the hydraulic motor (10) to a value which is greater than zero, at least until the pressure of the high-pressure line (12) decreases to the upper limit value Pmax.

2. The method of operating a hydraulic motor (10) according to claim 1,
wherein the stop step further includes setting the displacement (Fd_{M}) of the hydraulic motor (10) to zero after the pressure of the high-pressure line (12) decreases to the upper limit value Pmax.

3. The method of operating a hydraulic motor (10) according to claim 1 or 2,
wherein the at least one high-pressure valve (28) comprises a plurality of high-pressure valves (28) and the at least one low-pressure valve (30) comprises a plurality of low-pressure valves (30), and
wherein the stop step includes adjusting the displacement (Fd_{M}) of the hydraulic motor (10) by operating the plurality of high-pressure valves (28) and the plurality of low-pressure valves (30).

4. The method of operating a hydraulic motor (10) according to any one of claims 1 to 3,
wherein the rotor shaft (32) of the hydraulic motor (10) is related to a grid via a generator (16) during normal operation of the hydraulic motor (10), and
wherein the stop step further includes:
separating the hydraulic motor (10) from the grid via the generator (16) so as to reduce a rotation speed of the hydraulic motor (10) after the pressure of the high-pressure line (12) decreases to the upper limit value Pmax.

5. The method of operating a hydraulic motor (10) according to any one of claims 1 to 4,
wherein the stop step further includes:
opening a bypass valve (48) disposed in a bypass line (46) connecting between the high-pressure line (12) and the low-pressure line (14) at least until the pressure of the high-pressure line (12) decreases to the upper limit value Pmax.

6. The method of operating a hydraulic motor (10) according to claim 5,
wherein the stop step further includes:
operating of opening or closing of the bypass valve (48) so as to maintain the pressure of the high-pressure line (12) to be within the predetermined range after the pressure of the high-pressure line (12) decreases to the upper limit value Pmax.

7. The method of operating a hydraulic motor (10) according to claim 5 or 6,
wherein the stop step further includes:
opening the bypass valve (48) when the pressure of the high-pressure line (12) has decreased to the upper limit value Pmax and the rotation speed of the rotor shaft (32) is not greater than the predetermined rotation speed.

8. The method of operating a hydraulic motor (10) according to any one of claims 1 to 7,
wherein the stop step includes
setting a displacement (Fd_{M}) of a hydraulic pump (10) for supplying pressurized oil to the high-pressure line (12) to zero, in response to detection of the abnormality.

9. The method of operating a hydraulic motor (10) according to any one of claims 1 to 8,
wherein the stop step further includes:
discharging high-pressure oil to the high-pressure line (12) from an accumulator (44) in communication with the high-pressure line (12).

10. The method of operating a hydraulic motor (10) according to any one of claims 1 to 9,
wherein the abnormality of the hydraulic motor (10) is juddering in which the high-pressure valve (28) fails to close and stays open over an entire period of the reciprocating motion of the piston (22).

11. A hydraulic motor (10), comprising:
a rotor shaft (32);
a cylinder (20);
a piston (22) forming a working chamber (24) together with the cylinder (20);
at least one high-pressure valve (28) and at least one low-pressure valve (30) configured to switch a communication state between the working chamber (24) and a high-pressure line (12) and between the working chamber (24) and a low-pressure line (14), respectively, in connection with reciprocating motion of the piston (22), and
an operation control system (101) comprising:
an abnormality detecting part (102) for detecting an abnormality of the hydraulic motor (10); and
an operation control part (104) for controlling operation of the hydraulic motor (10),
**characterized in that** the operation control part (104) is configured
to maintain a pressure of the high-pressure line (12) to be within a predetermined range of not greater than an upper limit value Pmax which is smaller than a rated pressure of the high-pressure line (12) and not less than a lower limit value Pmin which is greater than zero, at least until a rotation speed of the rotor shaft (32) decreases to a predetermined rotation speed (N₁) which is lower than a rated rotation speed (N_{rated}), when the abnormality is detected by the abnormality detecting part (102), and
to set a displacement (Fd_{M}) of the hydraulic motor (10) to a value which is greater than zero, at least until the pressure of the high-pressure line (12) decreases to the upper limit value Pmax.

12. A hydraulic transmission (7) comprising:
a hydraulic pump (8) for producing pressurized oil;
a hydraulic motor (10) according to claim 11 configured to be driven by the pressurized oil from the hydraulic pump (8);
a high-pressure line (12) connecting an outlet of the hydraulic pump (8) and an inlet of the hydraulic motor (10); and
a low-pressure line (14) connecting an outlet of the hydraulic motor (10) and an inlet of the hydraulic pump (8).

13. A renewable-energy type power generating apparatus (1), comprising:
a rotor (3) configured to receive renewable energy to rotate;
the hydraulic transmission (7) according to claim 12; and
a generator (16) connected to the hydraulic transmission (7),
wherein the hydraulic pump (8) is configured to be driven by the rotor (3) to pressurize working oil, and
wherein the generator (16) is configured to be driven by the hydraulic motor (10).

## Patentansprüche

1. Ein Verfahren zum Betreiben eines hydraulischen Motors (10), der umfasst:
eine Rotorwelle (32), einen Zylinder (20), einen Kolben (22), der eine Arbeitskammer (24) zusammen mit dem Zylinder (20) bildet, und zumindest ein Hochdruckventil (28) und zumindest ein Niederdruckventil (30), die jeweils zum Schalten eines Verbindungszustands zwischen der Arbeitskammer (24) und einer Hochdruckleitung (12) und zwischen der Arbeitskammer (24) und einer Niederdruckleitung (14), in Verbindung mit einer Hin- und Herbewegung des Kolbens (22), konfiguriert sind, wobei das Verfahren aufweist:
einen Schritt (S2) des Erfassens einer Abnormalität des hydraulischen Motors (10), und
einen Stoppschritt des Stoppens des hydraulischen Motors (10), wenn die Abnormalität erfasst wird,
wobei der Stoppschritt aufweist:
Halten eines Drucks der Hochdruckleitung (12) innerhalb eines vorbestimmten Bereichs von nicht mehr als einem oberen Grenzwert Pmax, der kleiner ist als ein Nenndruck der Hochdruckleitung (12), und nicht weniger als einem unteren Grenzwert Pmin, der größer ist als null, zumindest bis eine Rotationsgeschwindigkeit der Rotorwelle (32) auf eine vorbestimmte Rotationsgeschwindigkeit (N₁) absinkt, die niedriger ist als eine Nenn-Rotationsgeschwindigkeit (N_{rated}), und
Einstellen einer Verdrängung (Fd_{M}) des hydraulischen Motors (10) auf einen Wert, der größer ist als null, zumindest bis der Druck der Hochdruckleitung (12) auf den oberen Grenzwert Pmax absinkt.

2. Das Verfahren zum Betreiben eines hydraulischen Motors (10) gemäß Anspruch 1,
wobei der Stoppschritt ferner ein Einstellen der Verdrängung (Fd_{M}) des hydraulischen Motors (10) auf null, nachdem der Druck der Hochdruckleitung (12) auf den oberen Grenzwert Pmax absinkt, umfasst.

3. Das Verfahren zum Betreiben eines hydraulischen Motors (10) gemäß Anspruch 1 oder 2,
wobei das zumindest eine Hochdruckventil (28) eine Vielzahl von Hochdruckventilen (28) und das zumindest eine Niederdruckventil (30) eine Vielzahl von Niederdruckventilen (30) aufweist, und
wobei der Stoppschritt ein Einstellen der Verdrängung (Fd_{M}) des hydraulischen Motors (10) durch Betätigen der Vielzahl von Hochdruckventilen (28) und der Vielzahl von Niederdruckventilen (30) aufweist.

4. Das Verfahren zum Betreiben eines hydraulischen Motors (10) gemäß einem der Ansprüche 1 bis 3,
wobei die Rotorwelle (32) des hydraulischen Motors (10) über einen Generator (16) während eines Normalbetriebs des hydraulischen Motors (10) mit einem Netz in Beziehung steht, und
wobei der Stoppschritt ferner aufweist:
Trennen des hydraulischen Motors (10) von dem Netz über den Generator (16), um eine Rotationsgeschwindigkeit des hydraulischen Motors (10) zu verringern, nachdem der Druck der Hochdruckleitung (12) auf den oberen Grenzwert Pmax absinkt.

5. Das Verfahren zum Betreiben eines hydraulischen Motors (10) gemäß einem der Ansprüche 1 bis 4,
wobei der Stoppschritt ferner aufweist:
Öffnen eines Bypassventils (48), das in einer Bypassleitung (46) angeordnet ist, welche eine Verbindung zwischen der Hochdruckleitung (12) und der Niederdruckleitung (14) herstellt, zumindest bis der Druck der Hochdruckleitung (12) auf den oberen Grenzwert Pmax absinkt.

6. Das Verfahren zum Betreiben eines hydraulischen Motors (10) gemäß Anspruch 5,
wobei der Stoppschritt ferner aufweist:
Betätigen eines Öffnens oder Schließens des Bypassventils (48), um den Druck der Hochdruckleitung (12) innerhalb des vorbestimmten Bereichs zu halten, nachdem der Druck der Hochdruckleitung (12) auf den oberen Grenzwert Pmax absinkt.

7. Das Verfahren zum Betreiben eines hydraulischen Motors (10) gemäß Anspruch 5 oder 6,
wobei der Stoppschritt ferner aufweist:
Öffnen des Bypassventils (48), wenn der Druck der Hochdruckleitung (12) auf den oberen Grenzwert Pmax abgesunken ist und die Rotationsgeschwindigkeit der Rotorwelle (32) nicht höher ist als die vorbestimmte Rotationsgeschwindigkeit.

8. Das Verfahren zum Betreiben eines hydraulischen Motors (10) gemäß einem der Ansprüche 1 bis 7,
wobei der Stoppschritt aufweist
Einstellen einer Verdrängung (Fd_{M}) einer hydraulischen Pumpe (10) zum Zuführen von Drucköl zu der Hochdruckleitung (12) auf null, in Reaktion auf die Erfassung der Abnormalität.

9. Das Verfahren zum Betreiben eines hydraulischen Motors (10) gemäß einem der Ansprüche 1 bis 8,
wobei der Stoppschritt ferner aufweist:
Austragen von Hochdrucköl zu der Hochdruckleitung (12) von einem Akkumulator (44) in Verbindung mit der Hochdruckleitung (12).

10. Das Verfahren zum Betreiben eines hydraulischen Motors (10) gemäß einem der Ansprüche 1 bis 9,
wobei die Abnormalität des hydraulischen Motors (10) ein Rattern oder Ruckeln ist, bei dem das Hochdruckventil (28) sich nicht schließt und über einer gesamten Zeitspanne der Hin- und Herbewegung des Kolbens (22) offen bleibt.

11. Ein hydraulischer Motor (10), der umfasst:
eine Rotorwelle (32), einen Zylinder (20), einen Kolben (22), der eine Arbeitskammer (24) zusammen mit dem Zylinder (20) bildet, und zumindest ein Hochdruckventil (28) und zumindest ein Niederdruckventil (30), die jeweils zum Schalten eines Verbindungszustands zwischen der Arbeitskammer (24) und einer Hochdruckleitung (12) und zwischen der Arbeitskammer (24) und einer Niederdruckleitung (14), in Verbindung mit einer Hin- und Herbewegung des Kolbens (22), und
ein Betriebssteuersystem (101) mit:
einem Abnormalitätserfassungsteil (102) zum Erfassen einer Abnormalität des hydraulischen Motors (10), und
einem Betriebssteuerteil (104) zum Steuern eines Betriebs des hydraulischen Motors (10),
**dadurch gekennzeichnet, dass** das Betriebssteuerteil (104) konfiguriert ist zum
Halten eines Drucks der Hochdruckleitung (12) innerhalb eines vorbestimmten Bereichs von nicht mehr als einem oberen Grenzwert Pmax, der kleiner ist als ein Nenndruck der Hochdruckleitung (12), und nicht weniger als einem unteren Grenzwert Pmin, der größer ist als null, zumindest bis eine Rotationsgeschwindigkeit der Rotorwelle (32) auf eine vorbestimmte Rotationsgeschwindigkeit (N₁) absinkt, die niedriger ist als eine Nenn-Rotationsgeschwindigkeit (N_{rated}), wenn die Abnormalität durch den Abnormalitätserfassungsteil (102) erfasst wird, und
Einstellen einer Verdrängung (Fd_{M}) des hydraulischen Motors (10) auf einen Wert, der größer ist als null, zumindest bis der Druck der Hochdruckleitung (12) auf den oberen Grenzwert Pmax absinkt.

12. Ein hydraulisches Getriebe (7) mit:
einer hydraulischen Pumpe (8) zum Erzeugen von Drucköl,
einem hydraulischen Motor (10) gemäß Anspruch 11, der konfiguriert ist, um durch das Drucköl von der hydraulischen Pumpe (8) angetrieben zu werden,
einer Hochdruckleitung (12), die einen Auslass der hydraulischen Pumpe (8) und einen Einlass des hydraulischen Motors (10) verbindet, und
einer Niederdruckleitung (14), die einen Auslass des hydraulischen Motors (10) und einen Einlass der hydraulischen Pumpe (8) verbindet.

13. Eine Vorrichtung zum Erzeugen von Strom aus erneuerbarer Energie (1), mit:
einem Rotor (3), der konfiguriert ist, um erneuerbare Energie zur Rotation zu empfangen,
dem hydraulischen Getriebe (7) gemäß Anspruch 12, und
einem Generator (16), der mit dem hydraulischen Getriebe (7) verbunden ist,
wobei die hydraulische Pumpe (8) konfiguriert ist, um durch den Rotor (3) angetrieben zu werden, um Arbeitsöl mit Druck zu beaufschlagen, und
wobei der Generator (16) konfiguriert ist, um durch den hydraulischen Motor (10) angetrieben zu werden.

## Revendications

1. Procédé pour faire fonctionner un moteur (10) hydraulique, comprenant : un arbre (32) de rotor; un cylindre (20); un piston (22) formant une chambre (24) de travail ensemble avec le cylindre (20); et au moins une soupape (28) de haute pression et au moins une soupape (30) de basse pression, configurée pour commuter un état de communication entre la chambre (24) de travail et une ligne (22) de haute pression et entre la chambre (24) de travail et une ligne (14) de basse pression, respectivement, en liaison avec un mouvement d'aller et retour du piston (22), le procédé comprenant :
un stade (S2) de détection d'une anomalie du moteur (10) hydraulique et
un stade d'arrêt dans lequel on arrête le moteur (10) hydraulique si l'on détecte l'anomalie,
dans lequel le stade d'arrêt comprend :
maintenir une pression de la ligne (12) de haute pression dans une plage déterminée à l'avance, non supérieure à une valeur Pmax limite supérieure, qui est plus petite qu'une pression nominale de la ligne (12) de haute pression et non inférieure à une valeur Pmin limite inférieure, qui est plus grande que zéro, au moins jusqu'à ce qu'une vitesse de rotation de l'arbre (32) du rotor diminue à une vitesse (N₁) de rotation déterminée à l'avance, qui est plus petite qu'une vitesse (N_{rated}) de rotation nominale et
régler une cylindrée (Fd_{N}) du moteur (10) hydraulique à une valeur qui est plus grande que zéro, au moins jusqu'à ce que la pression de la ligne (12) de haute pression diminue à la valeur Pmax limite supérieure.

2. Procédé pour faire fonctionner un moteur (10) hydraulique suivant la revendication 1,
dans lequel le stade d'arrêt comprend, en outre, fixer la cylindrée (Fd_{M}) du moteur (10) hydraulique à zéro, après que la pression de la ligne (12) de haute pression a diminué à la valeur Pmax limite supérieure.

3. Procédé pour faire fonctionner un moteur (10) hydraulique suivant la revendication 1 ou 2,
dans lequel la au moins une soupape (28) de haute pression comprend une pluralité de soupapes (28) de haute pression et la au moins une soupape (30) de basse pression comprend une pluralité de soupapes (30) de basse pression et
dans lequel le stade d'arrêt comprend régler la cylindrée (Fd_{M}) du moteur (10) hydraulique en faisant fonctionner la pluralité de soupapes (28) de haute pression et la pluralité de soupapes (30) de basse pression.

4. Procédé pour faire fonctionner un moteur (10) hydraulique suivant l'une quelconque des revendications 1 à 3,
dans lequel l'arbre (32) de rotor du moteur (10) hydraulique est relié à un réseau par l'intermédiaire d'une génératrice (16) pendant un fonctionnement normal du moteur (10) hydraulique et
dans lequel le stade d'arrêt comprend, en outre :
séparer le moteur (10) hydraulique du réseau par l'intermédiaire de la génératrice (16), de manière à réduire une vitesse de rotation du moteur (10) hydraulique après que la pression de la ligne (12) de haute pression a diminué à la valeur Pmax limite supérieure.

5. Procédé pour faire fonctionner un moteur (10) hydraulique suivant l'une quelconque des revendications 1 à 4,
dans lequel le stade d'arrêt comprend, en outre :
ouvrir une soupape (48) de dérivation, montée dans une ligne (46) de dérivation reliant la ligne (12) de haute pression et la ligne (14) de basse pression, au moins jusqu'à ce que la pression de la ligne (12) de haute pression diminue à la valeur Pmax limite supérieure.

6. Procédé pour faire fonctionner un moteur (10) hydraulique suivant la revendication 5,
dans lequel le stade d'arrêt comprend, en outre :
opérer, en ouvrant ou en fermant la soupape (48) de dérivation, de manière à maintenir la pression de la ligne (12) de haute pression dans la plage déterminée à l'avance après que la pression de ligne (12) de haute pression a diminué à la valeur Pmax limite supérieure.

7. Procédé pour faire fonctionner un moteur (10) hydraulique suivant la revendication 5 ou 6,
dans lequel le stade d'arrêt comprend, en outre :
ouvrir la soupape (48) de dérivation, lorsque la pression de la ligne (12) de haute pression a diminué à la valeur Pmax limite supérieure et lorsque la vitesse de rotation de l'arbre (32) du rotor n'est pas plus grande que la vitesse de rotation déterminée à l'avance.

8. Procédé pour faire fonctionner un moteur (10) hydraulique suivant l'une quelconque des revendications 1 à 7,
dans lequel le stade d'arrêt comprend
fixer une cylindrée (Fd_{M}) d'une pompe (10) hydraulique à zéro pour alimenter en huile sous pression la ligne (12) de haute pression en réaction à la détection de l'anomalie.

9. Procédé pour faire fonctionner un moteur (10) hydraulique suivant l'une quelconque des revendications 1 à 8,
dans lequel le stade d'arrêt comprend, en outre :
refouler de l'huile haute pression dans la ligne (12) de haute pression à partir d'un accumulateur (44) en communication avec la ligne (12) de haute pression.

10. Procédé pour faire fonctionner un moteur (10) hydraulique suivant l'une quelconque des revendications 1 à 9,
dans lequel l'anomalie du moteur (10) hydraulique fait des soubresauts, dans lequel la soupape (28) de haute pression ne fonctionne plus à la fermeture et reste ouverte sur une période entière du mouvement d'aller et retour du piston (22).

11. Moteur (10) hydraulique, comprenant :
un arbre (32) de rotor;
un cylindre (20);
un piston (22) formant une chambre (24) de travail ensemble avec le cylindre (20);
au moins une soupape (28) de haute pression et au moins une soupape (30) de basse pression, configurées pour commuter un état de communication entre la chambre (24) de travail et la ligne (12) de haute pression et entre la chambre (24) de travail et une ligne (14) de basse pression, respectivement, en liaison avec le mouvement d'aller et retour du piston (22) et
un système de commande (101) du fonctionnement, comprenant :
une partie (102) de détection d'une anomalie pour détecter une anomalie du moteur (10) hydraulique et
une partie (104) de commande du fonctionnement pour commander le fonctionnement du moteur (10) hydraulique,
**caractérisé en ce que** la partie (104) de commande du fonctionnement est configurée
pour maintenir une pression de la ligne (12) de haute pression dans une plage déterminée à l'avance, non supérieure à une valeur Pmax limite supérieure, qui est plus petite qu'une pression nominale de la ligne (12) de haute pression et non inférieure à une valeur Pmin limite inférieure, qui est plus grande que zéro, au moins jusqu'à ce qu'une vitesse de rotation de l'arbre (32) du rotor diminue à une vitesse (N₁) de rotation déterminée à l'avance, qui est plus petite qu'une vitesse (N_{rated}) de rotation nominale, lorsque l'anomalie est détectée par la partie (102) de détection d'une anomalie et
pour régler une cylindrée (Fd_{M}) du moteur (10) hydraulique à une valeur qui est plus grande que zéro, au moins jusqu'à ce que la pression de la ligne (12) de haute pression diminue à la valeur Pmax limite supérieure.

12. Transmission (7) hydraulique, comprenant :
une pompe (8) hydraulique pour produire de l'huile sous pression;
un moteur (10) hydraulique suivant la revendication 11, configuré pour être entraîné par l'huile sous pression provenant de la pompe (8) hydraulique;
une ligne (12) de haute pression mettant une sortie de la pompe (8) hydraulique en communication avec une entrée du moteur (10) hydraulique et
une ligne (14) de basse pression mettant une sortie du moteur (10) hydraulique en communication avec une entrée de la pompe (8) hydraulique.

13. Installation (1) de production d'électricité de type à énergie renouvelable, comprenant :
un rotor (3) configuré pour recevoir de l'énergie renouvelable afin de tourner;
la transmission (7) hydraulique suivant la revendication 12 et
une génératrice (16) reliée à la transmission (7) hydraulique,
dans laquelle la pompe (8) hydraulique est configurée pour être entraînée par le rotor (3) pour mettre de l'huile de travail sous pression et
dans laquelle la génératrice (16) est configurée pour être entraînée par le moteur (10) hydraulique.
